# EUROPÄISCHE PATENTSCHRIFT

(11) **EP 1 880 141 B1**
(45) Veröffentlichungstag und Bekanntmachung des Hinweises auf die Patenterteilung: **01.10.2014**
(21) Anmeldenummer: 06755118.4
(22) Anmeldetag: 10.05.2006
(51) Int. Cl.: F23N 1/02, F23N 5/00, F23N 5/02, F23N 5/16, F23R 3/34, F02C 9/50, F23R 3/26

(54) **VERFAHREN UND VORRICHTUNG ZUM REGELN DER FAHRLINIE EINER GASTURBINENBRENNKAMMER**
METHOD AND APPARATUS FOR REGULATING THE FUNCTIONING OF A GAS TURBINE COMBUSTOR
PROCÉDÉ ET DISPOSITIF DE RÉGULATION DU FONCTIONNEMENT DANS UNE CHAMBRE DE COMBUSTION D'UNE TURBINE À GAZ

(30) Priorität: 13.05.2005 EP 05010543
(43) Veröffentlichungstag der Anmeldung: 23.01.2008
(73) Patentinhaber: Siemens Aktiengesellschaft, 80333 München (DE)
(72) Erfinder: BAUER, Andreas, 41515 Grevenbroich (DE); BODE, Siegfried, 45481 Mülheim (DE); DEUKER, Eberhard, 45481 Mülheim (DE); DIEBELS, Andreas, 46242 Bottrop (DE); HAHNER, Thomas, 40489 Düsseldorf (DE); HESSE, Thomas, 12589 Berlin (DE); KREBS, Werner, 45481 Mülheim (DE); LEPERS, Joachim, 83022 Rosenheim (DE); MÜLLER, Martin, 10557 Berlin (DE); PERNAU, Stefan, 45145 Essen (DE); PRADE, Bernd, 45478 Mülheim (DE); SCHNEIDER, Peter-Andreas, 48145 Münster (DE); SIMON, Dieter, 45473 Mülheim (DE); STURM, Berthold, 33034 Brakel (DE); THÖLKING, Heinrich, 49377 Vechta (DE); WARNACK, Dieter, 12049 Berlin (DE)
(86) Internationale Anmeldenummer: PCT/EP2006/062183
(87) Internationale Veröffentlichungsnummer: WO 2006/120206

(56) Entgegenhaltungen:
- EP-A- 0 677 706
- EP-A- 0 962 704
- EP-A- 1 286 031
- EP-A- 1 300 566
- US-A1- 2003 140 614
- US-A1- 2004 076 218
- US-A1- 2004 255 594

## Beschreibung

Die vorliegende Erfindung betrifft ein Regelverfahren sowie eine Regelvorrichtung zum Regeln der Fahrlinie einer Gasturbinenbrennkammer.

Eine Gasturbine ist eine Strömungsmaschine, die in der Regel einen Verdichter, eine Turbine und einen Brennkammerabschnitt umfasst. Im Verdichter wird angesaugte Umgebungsluft verdichtet und die verdichtete Luft schließlich dem Brennkammerabschnitt zugeführt. Im Brennkammerabschnitt ist wenigstens eine Brennkammer mit zumeist mehreren Brennern angeordnet, denen die verdichtete Luft zugeführt wird. Neben der verdichteten Luft wird den Brennern außerdem ein Brennstoff zugeführt, der mit der Luft vermischt und verbrannt wird. Die dabei in der Brennkammer entstehenden heißen Verbrennungsabgase werden der Turbine zugeführt, wo sie entspannen und abkühlen und dabei die Turbine in Rotation versetzen. Auf diese Weise wird thermische Energie der Verbrennungsabgase in mechanische Arbeit umgewandelt, die einerseits zum Antreiben des Verdichters und andererseits zum Antreiben eines Verbrauchers, beispielsweise eines Generators zum Erzeugen von Strom eingesetzt wird.

Bei der Verbrennung in der Brennkammer ist darauf zu achten, dass eine stabile Flamme vorliegt. Instabilitäten der Flamme treten insbesondere aufgrund von resonanten Verbrennungsschwingungen im Verbrennungsabgas auf und können einerseits zu einem erhöhten Schadstoffausstoß führen und andererseits Schwingungen und Vibrationen der Brennkammer verursachen, welche die Lebensdauer der Brennkammer herabsetzen und Wartungsintervalle verkürzen.

Außerdem sind die Brenner üblicherweise außer mit einer Hauptbrennstoffzufuhr auch mit einer sog.

Pilotbrennstoffzufuhr ausgestattet. Über die Pilotbrennstoffzufuhr wird ein im Vergleich zum Hauptbrennstoffmassenstrom geringer Brennstoffmassenstrom zugeführt, um die die Flamme zu stützen. Zudem kann die Flamme durch Beeinflussen des Massenstroms an zugeführtem Pilotbrennstoff bei Bedarf stabilisiert werden.

Die Stabilität der Flamme wird von einer großen Anzahl von Störgrößen beeinflusst. Beispiele für derartige Störgrößen sind die Umgebungstemperatur, die Dichte und der Heizwert des Brennstoffes, aber auch der Bauzustand der Gasturbinenanlage, insbesondere der Brennkammer und der Brenner. Der Einfluss der Störgrößen wird mittels des über den Pilotbrenner zugeführten Brennstoffmassenstroms ausgeglichen. Der Pilotgasmassenstrom darf dabei bestimmte Grenzen nicht unter- bzw. überschreiten, da die Flamme sonst in einen instabilen Bereich überführt werden würde. Um den Pilotgasmassenstrom im stabilen Bereich der Flamme zu halten, findet eine Funktion Anwendung, welche den einzusetzenden Pilotgasmassenstrom in Abhängigkeit von den Störgrößen definiert. Diese Funktion wird auch Pilotgaskurve genannt.

In die Pilotgaskurve geht eine Anzahl an Gasturbinenparametern ein. Diese Parameter variieren von Gasturbinenanlage zu Gasturbinenanlage, selbst dann, wenn diese baugleich sind. Insbesondere sind auch die Umgebungsbedingungen am Aufstellungsort der Gasturbinenanlage zu berücksichtigen. Zudem können die Gasturbinenparameter beim Betrieb einer Gasturbinenanlage mit der Zeit Veränderungen unterworfen sein. Dies führt dazu, dass ein zeitaufwendiges Neueinstellen oder Nacheinstellen der Pilotgaskurve nötig werden kann. Durch den Einstellungsprozess werden hohe Kosten und Stillstandzeiten verursacht.

Hinzukommt noch, dass der Einfluss der Störgrößen auf die Pilotgaskurve quantitativ nur unzureichend bekannt ist. Auf manche Störgrößen kann überhaupt nicht adäquat reagiert werden.

Die EP 1 286 031 A1 beschreibt eine Steuervorrichtung für eine Gasturbine, in der eine Steuerung des Hauptbrennstoffstroms, des Pilotbrennstoffstroms oder der Kompressoreinlassschaufeln in Abhängigkeit von Fluktuationen in der Brennkammerbeschleunigung und im Brennkammerdruck erfolgt. Mittels einer Fouriertransformation werden hierzu die Spektren der Variationen ermittelt. Das Spektrum wird dann in Teilbereiche unterteilt, denen jeweils ein Schwellenwert zugeordnet ist. Dieser Schwellenwert gibt die höchste zulässige Intensität für die entsprechende Schwingungsfrequenz bzw. die in dem entsprechenden Teilbereich liegenden Schwingungsfrequenzen an. Die Steuerung erfolgt dann auf der Basis dieser Schwellenwerte und der ermittelten Intensitäten in den Teilbereichen.

Die EP 0 962 704 A2 beschreibt eine Vorrichtung zum Modulieren des Brennstoffmassenstroms, der einem Gasturbinenbrenner zugeführt wird. Die Modulation erfolgt in Abhängigkeit von Variationen im Druck, der in der Brennkammer herrscht.

Die EP 1 300 566 A2 beschreibt eine Vorrichtung und ein Verfahren zum Steuern des Brennstoffsplits in einer Gasturbinenverbrennungsanlage, wobei als Steuersignal ein Brennkammerinnenluftdruck verwendet wird.

Aufgabe der vorliegenden Erfindung ist es daher, ein Regelverfahren und eine Regelvorrichtung zur Verfügung zu stellen, das bzw. die sich vorteilhaft zum Unterbinden von Flammeninstabilitäten einsetzen lässt.

Diese Aufgabe wird durch ein Regelverfahren nach Anspruch 1 bzw. eine Regelvorrichtung nach Anspruch 13 gelöst. Die abhängigen Ansprüche enthalten vorteilhafte Ausgestaltungen der Erfindung.

Im erfindungsgemäßen Regelverfahren zum Regeln der Fahrlinie einer Gasturbinenanlage wird wenigstens eine Regelgröße erfasst, die erfasste Regelgröße mit einer vorgegebenen Führungsgröße verglichen, auf der Basis des Vergleichs wenigstens eine Stellgröße ermittelt. Die ermittelte Stellgröße wird an wenigstens eine die Luft- und/oder Brennstoffzufuhr zu einer Brennkammer der Gasturbinenanlage beeinflussende Stelleinrichtung ausgegeben. Als wenigstens eine Regelgröße dient hierbei eine Regelgröße, aus welcher sich die Annäherung der Flamme an eine Stabilitätsgrenze ableiten lässt. Als derartige Regelgrößen kommen insbesondere zeitliche Änderungen wenigstens eines Brennerparameters oder eines Brennkammerparameters in Betracht. Insbesondere können als Brennkammerparameter ein Wechseldruck in der Brennkammer und/oder eine Brennkammerbeschleunigung herangezogen werden. Als Brennerparameter oder Brennkammerparameter wird mindestens die zeitliche Änderung eines Wechseldruckes an einem Brennerflansch erfasst und/oder die zeitliche Änderung eines Wechseldruckes in einem Brennerplenum. Der Wechseldruck im Brennerplenum wird mittels eines im Brennerplenum angeordneten Sensors erfasst.

Mit dem erfindungsgemäßen Regelverfahren lässt sich die Flamme stabil halten, ohne dass der Einfluss der Störgrößen auf die Flammenstabilität quantitativ genau bekannt sein muss.

Die Erfindung beruht auf dem folgenden neuen Konzept. Statt wie im Stand der Technik auf die Störgrößen zu schauen, um die Stabilität der Flamme aufrecht zu erhalten, wird in dem erfindungsgemäßen Regelungsverfahren auf die Brummgrenzen, d.h. die Stabilitätsgrenzen selbst geschaut. Mit anderen Worten, der Pilotgasmassenstrom wird nicht in Abhängigkeit von den detektierten Störgrößen variiert sondern bei Annäherung an eine Brummgrenze geändert. Das Feststellen der Annäherung an eine Brummgrenze erfolgt dabei ohne quantitative Kenntnis der Störgrößen.

Erfindungsgemäß ist die quantitative Kenntnis der Störgrößen nicht notwendig, um die Brummgrenzen, die sich mit den Störgrößen verschieben, zu ermitteln und so eine Pilotgaskurve zur Verfügung stellen zu können, die sich für alle Störgrößen innerhalb der Brummgrenzen bewegt. Da wie bereits in der Einleitung ausgeführt der Einfluss der Störgrößen auf die Brummgrenzen selbst bei baugleichen Gasturbinenanlagen beispielsweise aufgrund unterschiedlicher Umgebungsbedingungen variiert, ist erfindungsgemäß ein individuelles Einstellen jeder Gasturbinenanlage nicht nötig.

Im erfindungsgemäßen Verfahren ist eine quantitative Kenntnis der Beziehung zwischen den Störgrößen und der Lage der Brummgrenzen nicht notwendig, da die Variation der Pilotgasmenge zum Stabilisieren der Flamme direkt davon abhängig gemacht werden kann, ob eine Annäherung an eine Brummgrenze erfolgt oder nicht und eine direkte Detektion einer Annäherung an die Brummgrenzen erfolgt. Daneben wird das Pilotgas auch weiterhin zum Stützen der Flamme herangezogen.

Zum Feststellen der Annäherung an eine Brummgrenze kann die zeitliche Änderung der bereits erwähnten Brennerparameter bzw. Brennkammerparameter herangezogen werden. Besonders geeignet ist hierbei der Wechseldruck an einem Brennerflansch, da dieser früher auf eine Annäherung an eine Brummgrenze reagiert, als der Wechseldruck in der Brennkammer und die Brennkammerbeschleunigung. Grundsätzlich sind jedoch alle der genannten Brennkammerparameter zum Feststellen einer Annäherung an die Brummgrenze geeignet.

Die genannten Brennerparameter und Brennkammerparameter (zum Beispiel der Wechseldruck, Brennkammerbeschleunigung oder OH-Strahlung) stellen oszillierende Größen dar, die zum Bewerten der Annäherung an eine Flammeninstabilität einer schnellen Fouriertransformation FFT (Fast Fourier Transformation) und/oder gemittelten Autokorrelationen unterzogen werden. Die schnelle Fouriertransformation und oder gemittelten Autokorrelationen stellen ein besonders geeignetes Mittel zum Analysieren zeitlich veränderlicher Größen dar.

Für die Bestimmung der Autokorrelationen werden die oszillierenden analogen Signale für mehrere Frequenzbänder zunächst amplitudengenau gefiltert und anschließend analog-digital gewandelt oder sie werden zunächst analog-digital gewandelt und anschließend amplitudengenau gefiltert. Die Autokorrelationen werden getrennt nach Frequenzbänder in kurzen zeitlichen Abständen auf der Grundlage von 2-8 Periodendauern des Signals bei der jeweiligen mittleren Frequenz dieser Frequenzbänder berechnet. Anschließend werden die Autokorrelationen getrennt nach Frequenzbänder jeweils zusammen mit einer Anzahl von 10-100 angrenzenden, aufeinander folgenden Autokorrelationen aus früheren Zeitschritten für die jeweiligen Frequenzbänder, gemittelt. Gleichzeitig mit der Mittelung der Autokorrelationen für die jeweiligen Frequenzbänder werden ihre Varianzen bestimmt.

Aus diesen Frequenzspektren und/oder gemittelten Autokorrelationen und/oder Varianzen der Autokorrelationen werden jetzt für die einzelnen Frequenzen oder bestimmte Frequenzbänder Transienten gebildet. Dies kann beispielsweise mit Hilfe einer linearen Regressionsrechnung erfolgen. Überschreiten einzelne Transienten oder damit gebildete Kenngrößen einen bestimmten Wert so erfolgt ein Regeleingriff, z.B. Reduzierung der Leistung oder Veränderung der Pilotgasmenge.

Überschreiten Kenngrößen, die aus den Absolutwerten der gemittelten Autokorrelationen sowie ihren Transienten sowie gegebenenfalls zusätzlich aus den Varianzen und den Transienten der Varianzen der Autokorrelation gebildet werden, bestimmte Werte, so erfolgt ein Regeleingriff zum Beispiel eine Reduzierung der Leistung oder Veränderung der Pilotgasmenge. Durch die Auswertung von Transienten lassen sich deutlich größere Vorwarnzeiten erzielen.

Weiterhin können im Regelverfahren neben dem wenigstens einen Brennerparameter und/oder dem wenigstens einen Brennkammerparameter ein oder mehrere Verbrennungsparameter als Regelgrößen erfasst werden. Ein geeigneter Verbrennungsparameter ist beispielsweise der Schadstoffausstoß der Gasturbinenanlage, insbesondere der Stickoxidgehalt (NOₓ-Gehalt) und/oder der Kohlenmonoxidgehalt (CO-Gehalt) im Verbrennungsabgas. Ein ebenfalls geeigneter Verbrennungsparameter ist der Druckabfall über die Brennkammer.

Zudem können im erfindungsgemäßen Regelverfahren die Absolutwerte der Brennerparameter und der Brennkammerparameter zur weiteren Unterstützung erfasst werden. In erster Linie wird jedoch auf die zeitliche Änderung der Brennerparameter und der Brennkammerparameter geachtet, um eine Annäherung an die Brummgrenzen festzustellen.

Als Stellgröße kann wenigstens eine Größe ausgegeben werden, welche zu einer Änderung der Gasturbinenleistung führt, und/oder eine Größe, welche eine Änderung der korrigierten Abgastemperatur der Verbrennungsabgase führt. Insbesondere wird jedoch eine Größe als Stellgröße ausgegeben, welche eine Änderung des Pilotgasmassenstroms repräsentiert. Eine Änderung der Gasturbinenleistung oder der korrigierten Abgastemperatur erfolgt in der Regel indirekt über eine Änderung der Absolutwerte der Luft- und Hauptbrennstoffzufuhr sowie über eine Änderung des Verhältnisses von Luftzufuhr zu Hauptbrennstoffzufuhr. Als Größen, die zu einer Änderung der Gasturbinenleistung oder der korrigierten Abgastemperatur führen, sind daher insbesondere solche Größen anzusehen, welche einzustellende Absolutwerte der Luftzufuhr und/oder der Hauptbrennstoffzufuhr und/oder des Verhältnisses von Luftzufuhr zu Hauptbrennstoffzufuhr repräsentieren. Änderungen der Gasturbinenleistung können bspw. dazu eingesetzt werden, die Gasturbinenanlage im Emissionsbereich zu halten, ohne die eigentliche Fahrlinie der Anlage zu verlassen. Die Änderung des Pilotgasmassenstroms wird hingegen eingesetzt, wenn die Fahrlinie der Gasturbinenanlage verändert werden soll, um das Erreichen der Brummgrenzen zu verhindern. Gegebenenfalls kann dies mit einer Änderung der korrigierten Abgastemperatur und/oder der Gasturbinenleistung kombiniert werden.

Die Verknüpfung zwischen der erfassten Regelgröße und der Führungsgröße einerseits mit der Stellgröße andererseits kann insbesondere auf der Basis einer Fuzzy-Logic erfolgen. Alternativ ist es jedoch auch möglich ein, neuronales Netzwerk oder ein festes Regelgesetz zu verwenden. Die Fuzzy-Logic ermöglicht es insbesondere, Abstufungen in der Reaktion in Abhängigkeit vom Grad der Annäherung an die Brummgrenzen zu realisieren.

Insgesamt ermöglicht das erfindungsgemäße Regelverfahren das Erreichen und Überschreiten der Brummgrenzen zuverlässig zu verhindern. Schnellschlüsse der Gasturbinenanlage, d.h. Schnellabschaltungen der Anlage, aufgrund des Erreichens der Brummgrenzen können so zuverlässig vermieden werden. Außerdem können die Betriebsgrenzen der Gasturbinenanlage besser ausgenutzt werden. Beispielsweise kann ein hoher Stickoxidausstoß aufgrund einer erhöhten Flammeninstabilität vermindert werden, oder es kann eine höhere korrigierte Abgastemperatur (OTC Outlet Temperature Corrected) zur Anwendung kommen, wodurch sich der Wirkungsgrad der Gasturbinenanlage verbessern lässt. Ebenso ist es möglich, eine Absenkung der korrigierten Abgastemperatur bei Unterschreiten einer bestimmten Verdichtereintrittstemperatur zu vermeiden oder wenigstens zu verringern. Unter der Verdichtereintrittstemperatur ist hierbei die Temperatur der vom Verdichter angesaugten Luft beim Eintritt in den Verdichter zu verstehen.

Eine erfindungsgemäße Regelvorrichtung zum Regeln der Fahrlinie einer Gasturbinenanlage umfasst:
- Wenigstens einen Sensor zum Erfassen einer Messgröße und zum Ausgeben eines die Messgröße repräsentierenden Messsignals.
- Wenigsten eine Stelleinrichtung zum Beeinflussen der Luftzufuhr und/oder der Brennstoffzufuhr zu einer Brennkammer der Gasturbinenanlage auf der Basis einer Stellgröße.
- Einen mit dem wenigstens einen Sensor zum Empfang der Messgröße und der wenigstens einen Stelleinrichtung zum Ausgeben der Stellgröße verbundenen Regler.

Der Regler ist zum Ermitteln der Stellgröße auf der Basis der empfangenen Messgröße und deren Abweichung von einer Führungsgröße ausgelegt. In der erfindungsgemäßen Regelvorrichtung ist wenigstens ein Sensor vorhanden, der dazu ausgestaltet ist, die zeitliche Änderung eines Brennerparameters oder eines Brennerkammerparameters zu erfassen. In der erfindungsgemäßen Regelvorrichtung ist wenigstens ein Sensor vorhanden, der dazu ausgestaltet ist, die zeitliche Änderung wenigstens eines Wechseldruckes an einem Brennerflansch zu erfassen und/oder es ist wenigstens ein Sensor vorhanden, der dazu ausgestaltet ist, die zeitliche Änderung eines Wechseldruckes in einem Brennerplenum zu erfassen. Der Sensor zur Erfassung des Wechseldruckes in einem Brennerplenum ist in dem Brennerplenum angeordnet.

Mit der erfindungsgemäßen Regelvorrichtung kann das erfindungsgemäße Verfahren durchgeführt werden, wodurch sich die Fahrlinie der Gasturbinenanlage insbesondere durch verbessertes Vermeiden von Flammeninstabilitäten optimieren lässt.

Weiterhin kann als Sensor hierbei insbesondere ein Sensor zum Erfassen eines Wechseldruckes in der Brennkammer und/oder ein Sensor zum Erfassen einer Brennkammerbeschleunigung vorhanden sein. Daneben kann wenigstens ein mit dem Regler verbundener Sensor zum Erfassen eines Verbrennungsparameters, beispielsweise eine Emissionsmessvorrichtung, mit der sich bspw. der Stickoxidgehalt oder der Kohlenmonoxidgehalt des Verbrennungsabgases ermitteln lässt, oder ein Sensor zum Erfassen eines absoluten Wertes eines Brenner- oder Brennkammerparameters vorhanden sein.

Als Stelleinrichtung kann wenigstens ein Brennstoffventil zum Beeinflussen eines in die Brennkammer eingeleiteten Brennstoffmassenstroms dienen. Vorzugsweise sind wenigstens ein Brennstoffventil für eine Hauptbrennstoffleitung und eines für die Pilotbrennstoffleitung vorhanden.

Als Stelleinrichtung kann alternativ oder vorzugsweise zusätzlich zu dem wenigstens einen Brennstoffventil der erste Leitschaufelkranz des Verdichters, also der Leitschaufelkranz, welcher der einströmenden Luft einströmseitig zugewandt ist, dienen. Dieser Leitschaufelkranz weist in der Regel bewegliche Leitschaufeln auf, mit denen der zum Einströmen von Luft zur Verfügung stehende Einströmquerschnitt des Verdichters variiert werden kann.

Wenn ein die zeitliche Änderung eines Brennerparameters oder eines Brennerkammerparameters erfassender Sensor zum Erfassen einer oszillierenden Messgröße ausgebildet ist, kann der Regelvorrichtung eine Fouriertransformationseinheit zugeordnet sein, die zum Durchführen einer schnellen Fouriertransformation ausgebildet ist, und/oder einer Recheneinheit zum Ermitteln gemittelter Autokorrelation um ein geeignetes Mittel zum Analysieren der oszillierenden Messgröße zur Verfügung zu stellen.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- FIG 1: zeigt eine Gasturbinenanlage in einer teilweise geschnittenen Seitenansicht.
- FIG 2: zeigt eine erfindungsgemäße Regelvorrichtung in Form eines Blockdiagrammes.

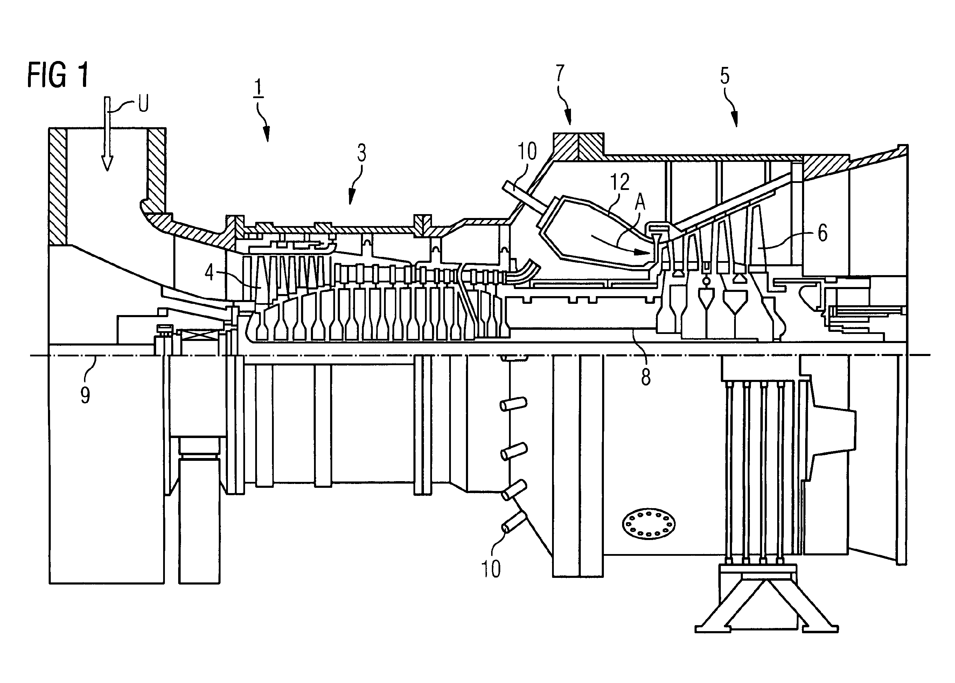

FIG 1 zeigt eine Gasturbinenanlage 1 in einer teilweise geschnittenen Seitenansicht. Diese umfasst einen Verdichterabschnitt 3, einen Turbinenabschnitt 5 und einen Brennerabschnitt 7. Im Verdichterabschnitt 3 und im Turbinenabschnitt 5 sind Verdichterlaufschaufeln 4 bzw. Turbinenlaufschaufeln 6 auf einer gemeinsamen Welle 8 angeordnet, die auch Turbinenläufer genannt wird. Der Turbinenläufer 8 ist um eine zentrale Achse 9 drehbar gelagert.

Der Brennerabschnitt 7 umfasst eine Anzahl Brenner 10, die in eine Brennkammer 12 münden, welche wiederum in den Turbinenabschnitt 5 mündet. Die Brennkammer 12 ist im vorliegenden Ausführungsbeispiel als Ringbrennkammer ausgebildet, d.h. sie erstreckt sich ringförmig um den Turbinenläufer 8 herum.

Im Betrieb der Gasturbinenanlage 1 wird über den Verdichter Umgebungsluft U eingesaugt, auf einen höheren Druck verdichtet und in den Brennerabschnitt 7 als sogenannte Verdichterluft ausgegeben. Die Größe des in den Verdichter eintretenden Luftmassenstroms kann durch Einstellen des nutzbaren Verdichtereinströmquerschnittes mittels des ersten Leitschaufelkranzes 32 beeinflusst werden.

Im Brennerabschnitt 7 tritt die Verdichterluft in den Brenner 10 ein und wird mit einem dem Brenner 10 über Brennstoffleitungen 40a, 40b zugeführten Brennstoff vermischt und in der Brennkammer 12 verbrannt. Die Größe der zugeführten Brennstoffmassenströme lässt sich hierbei über ein oder mehrere Einstellventile 31a, 31b beeinflussen.

Die bei der Verbrennung entstehenden Verbrennungsabgase bilden ein Arbeitsmedium A, welches dem Turbinenabschnitt 5 zugeleitet wird und dort unter Entspannung und Abkühlung Impuls auf die Laufschaufeln 6 überträgt und so den Rotor 8 in Rotation versetzt. Der rotierende Rotor 8 treibt einerseits den Verdichter an und ist andererseits mit einem Verbraucher (nicht dargestellt) gekoppelt, beispielsweise einem elektrischen Generator zum Erzeugen von Strom.

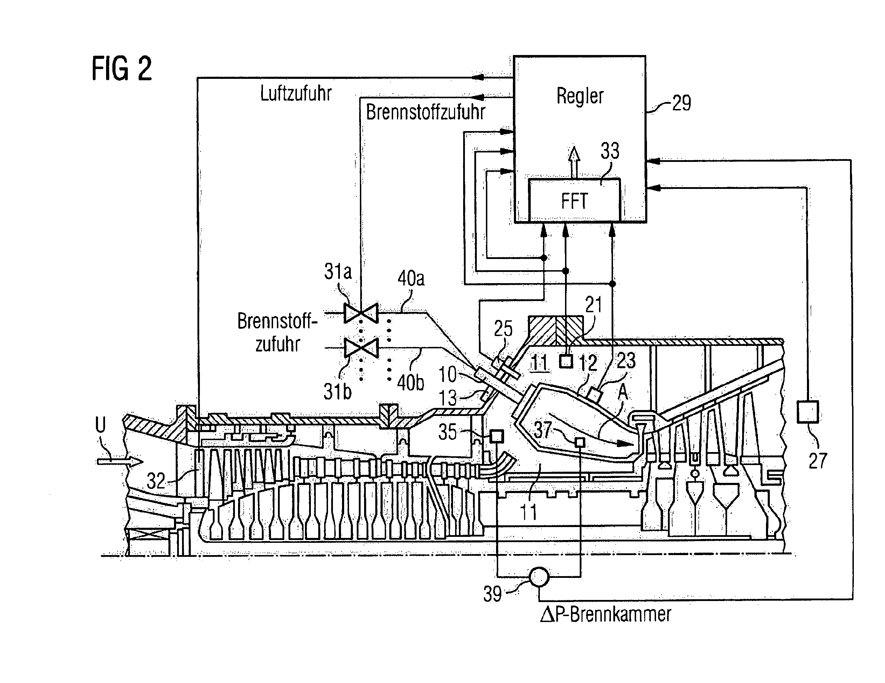

Um Instabilitäten der Flamme in der Brennkammer 12 zu vermeiden, ist die Gasturbinenanlage 1 mit einer Regelvorrichtung zum Regeln der Fahrlinie durch Beeinflussen der Brennstoff- und/oder Luftzufuhr ausgestattet. Diese Vorrichtung ist in Form eines Blockdiagrammes in FIG 2 dargestellt. Die Regelvorrichtung umfasst eine Anzahl von Sensoren 21, 23, 25, 27, 35, 37 welche an verschiedenen Stellen innerhalb und außerhalb der Gasturbinenbrennkammer 12 angeordnet sind. Die Regelvorrichtung umfasst weiter einen Regler 29, mit dem die Sensoren 21, 23, 25, 27, 35, 37 verbunden sind. Außerdem sind Stelleinrichtungen, nämlich die Einstellventile 31 und der Leitschaufelkranz 32, vorhanden, die ebenfalls mit dem Regler 29 in Verbindung stehen und die dazu ausgestaltet sind, die Massenströme der Brennstoffzufuhr sowie der Luftzufuhr zum Brenner 10 einzustellen.

In der Gasturbinenanlage 1 sind insbesondere drei einstellbare Brennstoffmassenströme und ein einstellbarer Luftmassenstrom vorhanden. Wenn beispielsweise ein gasförmiger Brennstoff zum Einsatz kommt, so ist einer der Brennstoffmassenströme ein sogenannter Diffusionsgasmassenstrom zum Betreiben des Brenners im Diffusionsmodus, in welchem das Gas direkt in die in der Brennkammer 12 befindliche Flamme eingedüst wird, ohne vorher mit Luft vermischt zu werden. Ein zweiter Brennstoffmassenstrom ist ein sogenannter Vormischgasmassenstrom zum Betreiben des Brenners in einem Vormischmodus, d.h. einem Modus, in welchem das zugeführte Gas zuvor mit der Verdichterluft vermischt wird und dieses Gemisch anschließend verbrannt wird. Schließlich ist als weiterer Brennstoffmassenstrom im vorliegenden Ausführungsbeispiel ein Pilotgasmassenstrom vorhanden, welcher u.a. dazu dient, die Flamme zu stützen, wenn der Brenner im Vormischbetrieb betrieben wird.

Mit den Sensoren 21, 23, 25, 27, 35, 37 werden verschiedene Brennkammerparameter und Verbrennungsparameter erfasst und an den Regler 29 in Form von die erfasste Messgröße repräsentierenden Signalen weitergegeben.

Der Sensor 21 ist ein im Brennkammerplenum 11 angeordneter Drucksensor zum Erfassen des Wechseldruckes im Brennerplenum 11 , der Sensor 25 ein am Gasturbinengehäuse angeordneter Drucksensor zum Erfassen des Wechseldruckes am Flansch 13 der des Brenners 10 und der Sensor 23 ein Beschleunigungssensor zum Erfassen der Brennkammerbeschleunigung. Dieser ist direkt an der Außenseite der Brennkammerwand angeordnet.

Alle drei erfassten Parameter, nämlich der Wechseldruck im Brennerplenum, der Wechseldruck am Brennerflansch sowie die Brennkammerbeschleunigung sind oszillierende Größen, welche Schwingungen in den Verbrennungsabgasen widerspiegeln. Die Drucksensoren 21 und 25 sowie der Beschleunigungssensor 23 sind daher zur Ausgabe ihrer Messsignale mit einer Fouriertransformationseinheit 33 und/oder Recheneinheit zum Ermitteln einer gemittelten Autokorrelation (nicht gezeigt) des Reglers 29 verbunden, in welcher eine Analyse der Messsignale anhand einer Fouriertransformation und insbesondere anhand einer sog. schnellen Fouriertransformation durchgeführt wird. Daneben sind sie auch direkt mit dem Regler 29, d.h. unter Umgehung der Fouriertransformationseinheit 33, verbunden, um dem Regler 29 auch die Absolutwerte der Messsignale zur Verfügung stellen zu können. Für die Bestimmung der Autokorrelationen werden die oszillierenden analogen Signale für mehrere Frequenzbänder zunächst amplitudengenau gefiltert und anschließend analog-digital gewandelt oder sie werden zunächst analog-digital gewandelt und anschließend amplitudengenau gefiltert. Die Autokorrelationen werden getrennt nach Frequenzbänder in kurzen zeitlichen Abständen auf der Grundlage von 2-8 Periodendauern des Signals bei der jeweiligen mittleren Frequenz dieser Frequenzbänder berechnet. Anschließend werden die Autokorrelationen getrennt nach Frequenzbänder jeweils zusammen mit einer Anzahl von 10-100 angrenzenden, aufeinander folgenden Autokorrelationen aus früheren Zeitschritten für die jeweiligen Frequenzbänder gemittelt. Gleichzeitig mit der Mittelung der Autokorrelationen für die jeweiligen Frequenzbänder werden ihre Varianzen bestimmt. Aus diesen Frequenzspektren und/oder gemittelten Autokorrelationen und/oder Varianzen der Autokorrelation werden jetzt für die einzelnen Frequenzen oder bestimmte Frequenzbänder Transienten gebildet. Dies kann beispielsweise mit Hilfe einer linearen Regressionsrechnung erfolgen. Überschreiten einzelne Transienten oder damit gebildete Kenngrößen einen bestimmten Wert so erfolgt ein Regeleingriff, z.B. Reduzierung der Leistung oder Veränderung der Pilotgasmenge. Überschreiten Kenngrößen, die aus den Absolutwerten der gemittelten Autokorrelationen sowie ihren Transienten sowie gegebenenfalls zusätzlich aus den Varianzen und den Transienten der Varianzen der Autokorrelationen gebildet werden, bestimmte Werte, so erfolgt ein Regeleingriff zum Beispiel eine Reduzierung der Leistung oder Veränderung der Pilotgasmenge. Durch die Auswertung von Transienten lassen sich deutlich größere Vorwarnzeiten erzielen.

Auf der Basis des Ergebnisses der Fouriertransformation kann der Regler 29 eine Annäherung an die Brummgrenzen der Gasturbinenanlage 1, bei denen bspw. stationäre Schwingungen in den Verbrennungsgasen auftreten, feststellen. Insbesondere kann auf Basis einer Messung des Wechseldruckes am Brennerflansch 13 nach einer Analyse durch die Fouriertransformationseinheit 33 die Frequenz von Schwingungen im Verbrennungsabgas ermittelt werden. Der Wechseldruck am Brennerflansch 13 eignet sich daher als Frühindikator für eine Annäherung an die Brummgrenzen und als Regelgröße für den Regler zum Regeln der Luft- und/oder Brennstoffzufuhr derart, dass die Flammenstabilität erhalten bleibt.

Die Brennkammerbeschleunigung reagiert später als der Wechseldruck am Brennerflansch 13 auf eine Annäherung an die Brummgrenzen. Sie eignet sich daher insbesondere dazu, die Gasturbinenbrennkammer 12 vor Beschädigungen zu schützen, wenn das Regeln der Luft und/oder Brennstoffzufuhr nicht zu einer ausreichenden Stabilisierung der Flamme führt. So ist die Brennkammerbeschleunigung bspw. ein Indikator für das Auftreten von Beschädigungen an keramischen Hitzeschildelementen, mit denen die Brennkammer 12 zum Schutz ihrer tragenden Struktur vor den heißen Verbrennungsabgasen ausgekleidet ist. Hohe Brennkammerbeschleunigungen können zu Rissen und sogar zu Brüchen in Hitzeschildelementen führen, wodurch diese ihre Schutzfunktion nicht mehr ausreichend erfüllen. Zudem können sich infolge von Brüchen Bruchstücke aus dem Hitzeschild lösen und in den Turbinenabschnitt gelangen, was zu sehr gravierenden Beschädigungen der Turbine führt. Auf der Basis der Brennkammerbeschleunigung kann daher bspw. eine Notabschaltung der Gasturbinenanlage vorgenommen werden, wenn die ermittelten Brennkammerbeschleunigungen anzeigen, dass Risse oder Brüche in den Hitzeschildelementen drohen.

Außer den Wechseldrücken in der Brennkammer 12 und am Brennerflansch 13 sowie der Brennkammerbeschleunigung kann auch der Druckabfall, auch Druckgradient genannt, über die Brennkammer 12 zum Feststellen eines bevorstehenden Brummereignisses herangezogen werden. So sinkt der Druckabfall über die Brennkammer 12 unmittelbar vor dem Brummen ab, was ein drohendes zurückziehen der Flamme in den Brenner 10 und damit eine Flammeninstabilität anzeigt. Mittels einer geeigneten Sensoranordnung zum Erfassen des Druckgradienten ist daher das Detektieren eines nahen Brummereignisses möglich.

Der Druckabfall über die Brennkammer 12 erfolgt mittels einer sog. Δp-Messung. Im vorliegenden Ausführungsbeispiel wird die Δp-Messung mittels zweier Drucksensoren 35, 37 durchgeführt, von denen der eine 35 im Brennkammerplenum 11 und der andere 37 in der Brennkammer 12 angeordnet ist. Ein mit den beiden Drucksensoren 35, 37 sowie dem Regler 29 verbundener Subtrahierer 39 bildet die Differenz Δp der erfassten Drücke, und gibt diese unter Umgehung der Fouriertransformationseinheit 33 an den Regler 29 weiter.

Der Regler 29 reagiert in erster Linie auf zeitliche Änderungen der von den Sensoren 21, 23, 25 erfassten Messgrößen und weniger auf ihre absoluten Werte. Wenn der Regler 29 nun nach der Analyse der von den Sensoren 21, 23, 25 eingehenden Signale die Annäherung an eine Brummgrenze feststellt, so gibt er ein Stellsignal an die Stellventile 31a, 31b, ... und/oder an den Verdichterleitschaufelkranz 32 aus, welche eine Änderung wenigstens eines Brennstoffmassenstroms und/oder des Luftmassenstromes veranlasst. Insbesondere gibt er in diesem Fall wenigstens ein Stellsignal an das Brennstoffventil in der Zufuhrleitung des Pilotbrennstoffes aus, um über eine Änderung des Pilotbrennstoffmassenstromes die Fahrlinie der Gasturbinenanlage wieder zu optimieren, d.h. von den Brummgrenzen wegzuführen. Hierbei können die korrigierte Abgastemperatur der Gasturbinenanlage sowie deren Leistung über ein Beeinflussen des Hauptbrennstoffmassenstromes und/oder des Luftmassenstromes derart justiert werden, dass der Schadstoffausstoß auf seinem optimalen Werten gehalten bzw. wieder auf diese eingestellt wird.

Außerdem können die Stellventile 31a, 31b, ... bzw. der Leitschaufelkranz 32 auch lediglich auf die den Brennstoffmassenstrom und/oder auf den Luftmassenstrom einwirken, um über eine Beeinflussung des Pilotgasmassenstromes und/oder der Gasturbinenleistung und/oder der korrigierten Abgastemperatur bspw. den Schadstoffausstoß im vorgesehenen Bereich zu halten, wenn er bspw. aufgrund schwankender Einflussgrößen, etwa einer schwankenden Umgebungstemperatur, variiert, ohne die Fahrlinie der Gasturbinenanlage neu zu optimieren.

Auf erhöhte Schadstoffwerte kann bspw. durch Einwirken auf den Pilotgasmassenstrom reagiert werden. So kann der Pilotgasmassenstrom reduziert werden, wenn die Stickoxidwerte im Abgasstrom hoch sind oder erhöht werden, wenn die Kohlenmonoxidwerte im Abgas hoch sind. Das Erfassen der Schadstoffwerte im Abgas erfolgt im vorliegenden Ausführungsbeispiel mittels einer Emissionsmessvorrichtung 27, welche im Abgaskanal der Brennkammeranlage angeordnet ist und mit dem Regler 29 unter Umgehung der Fouriertransformationseinheit 33 in Verbindung steht.

Im vorliegenden Ausführungsbeispiel arbeitet der Regler 29 auf der Basis einer Fuzzy-Logic, um ein möglichst abgestuftes Reagieren zu ermöglichen. Er kann jedoch auch mit einem festen Regelgesetz arbeiten, das beispielsweise als funktionaler Zusammenhang des auszugebenden Stellsignals und den eingehenden Messsignalen oder in Form einer die eingehenden Messsignale mit einem ausgehenden Stellsignal verknüpfenden Tabelle vorliegt. Schließlich ist es auch möglich, einen auf einem neuronalen Netzwerk basierenden Regler einzusetzen, wodurch der Regler in die Lage versetzt wird, aus vorangegangenen Reglungsereignissen zu lernen.

## Patentansprüche

1. Regelverfahren zum Regeln der Fahrlinie einer Gasturbinenanlage (1) mit den Schritten:
- Erfassen wenigstens einer Regelgröße;
- vergleichen einer erfassten Regelgröße mit einer vorgegebenen Führungsgröße,
- Ermitteln wenigstens einer Stellgröße auf der Basis des Vergleiches der Regelgröße mit der Führungsgröße und
- Ausgeben der ermittelten Stellgröße an wenigstens eine die Luft- und/oder die Brennstoffzufuhr zu einer Brennkammer (12) der Gasturbinenanlage (1) beeinflussende Stelleinrichtung (31, 32), wobei als die wenigstens eine Regelgröße eine Regelgröße Verwendung findet, welche die Annährung der Flamme an eine Stabilitätsgrenze anzeigt,
**dadurch gekennzeichnet, dass**
als Regelgröße die zeitliche Änderung wenigstens eines Wechseldrucks an einem Brennerflansch (13) und/oder die zeitliche
Änderung eines Wechseldruckes im Brennerplenum (11) erfasst wird, wobei der Wechseldruck im Brennerplenum mittels eines im Brennerplenum angeordneten Sensors (21) erfasst wird.

2. Regelverfahren nach Anspruch 1,
**dadurch gekennzeichnet, dass** außerdem als eine Regelgröße die zeitliche Änderung wenigstens einer Brennkammerbeschleunigung erfasst wird.

3. Regelverfahren nach Anspruch 1 oder 2,
**dadurch gekennzeichnet, dass** neben der zeitlichen Änderung wenigstens eines Wechseldrucks und ggf. der zeitlichen Änderung wenigstens einer Brennkammerbeschleunigung wenigstens ein Verbrennungsparameter als eine Regelgröße erfasst wird.

4. Regelverfahren nach Anspruch 3,
**dadurch gekennzeichnet, dass** als Verbrennungsparameter der NOx-Gehalt im Verbrennungsabgas und/oder CO-Gehalt im Ver¬brennungsabgas und/oder der Druckabfall über die Brennkammer dient bzw. dienen.

5. Regelverfahren nach einem der Ansprüche 1 bis 4,
**dadurch gekennzeichnet, dass** als eine weitere Regelgröße der absolute Wert wenigstens eines Brenner- oder Brennkammerparameters erfasst wird.

6. Regelverfahren nach einem der Ansprüche 1 bis 5,
**dadurch gekennzeichnet, dass** als Stellgröße wenigstens eine Größe ausgegeben wird, welche zu einer Änderung der Gasturbinenleistung führt, und/oder eine Größe ausgegeben wird, welche zu einer Änderung der korrigierten Temperatur der Verbrennungsabgase führt, und/oder eine Größe ausgegeben wird, welche zu einer Änderung eines Pilotgasmassenstromes führt.

7. Regelverfahren nach einem der Ansprüche 1 bis 6,
**dadurch gekennzeichnet, dass** der Vergleich einer erfassten Regelgröße mit einer Führungsgröße und/oder das Ermitteln der Stellgröße anhand des Vergleiches auf der Basis einer Fuzzy Logik erfolgt.

8. Regelverfahren nach einem der Ansprüche 1 bis 6,
**dadurch gekennzeichnet, dass** eine Verknüpfung der der Vergleich einer erfassten Regelgröße mit einer Führungsgröße und/oder das Ermitteln der Stellgröße anhand des Vergleiches mittels eines neuronalen Netzwerkes erfolgt.

9. Regelverfahren nach einem der Ansprüche 1 bis 6,
**dadurch gekennzeichnet, dass** der Vergleich einer erfassten Regelgröße mit einer Führungsgröße und/oder das Ermitteln der Stellgröße anhand des Vergleiches mittels eines festen Regelgesetzes erfolgt.

10. Regelverfahren nach einem der Ansprüche 1 bis 9,
**dadurch gekennzeichnet, dass** als zeitlich veränderliche Regelgrößen oszillierende Größen erfasst werden.

11. Regelverfahren nach Anspruch 10,
**dadurch gekennzeichnet, dass** eine oszillierende Größe einer schnellen Fouriertransformation und/oder gemittelten Autokorrelation unterzogen wird.

12. Regelverfahren nach Anspruch 11,
**dadurch gekennzeichnet, dass** Transienten gebildet werden.

13. Regelvorrichtung zum Regeln der Fahrlinie einer Gasturbinenanlage (1) mit
- wenigstens einem Sensor (21, 23, 25, 27, 35, 37) zum Erfassen einer Messgröße und zum Ausgeben eines die Messgröße repräsentierenden Messsignals,
- wenigstens einer Stelleinrichtung (31, 32) zum Beeinflussen der Luft- und/oder der Brennstoffzufuhr zu einer Brennkammer (12) der Gasturbinenanlage auf der Basis einer Stellgröße und
- einem mit dem wenigstens einen Sensor (21, 23, 25, 27, 35, 37) zum Empfang der Messgröße und der wenigstens einen Stelleinrichtung (31, 32) zum Ausgeben der Stellgröße verbundenen Regler (29), der zum Ermitteln der Stellgröße auf der Basis der empfangenen Messgröße und deren Abweichung von einer Führungsgröße ausgebildet ist,
**dadurch gekennzeichnet, dass**
als Sensor (21, 23, 25, 27, 35, 37) ein Sensor (25) vorhanden ist, der dazu ausgestaltet ist, die zeitliche Änderung wenigstens eines Wechseldruckes an einem Brennerflansch (13) zu erfassen und/oder als Sensor ein Sensor (21) vorhanden ist, der dazu ausgestaltet ist, die zeitliche Änderung eines Wechseldruckes in einem Brennerplenum (11) zu erfassen, wobei der die zeitliche Änderung des Wechseldruckes im Brennerplenum (11) erfassende Sensor (21) im Brennerplenum angeordnet ist.

14. Regelvorrichtung nach Anspruch 13,
**dadurch gekennzeichnet, dass** als Sensor außerdem ein Sensor (23) zum Erfassen einer Brennkammerbeschleunigung vorhanden ist.

15. Regelvorrichtung nach Anspruch 13 oder 14, **gekennzeichnet durch** wenigstens eine mit dem Regler (29) verbundenen Emissionsmessvorrichtung (27).

16. Regelvorrichtung nach einem der Ansprüche 13 bis 15, **gekennzeichnet durch** wenigstens einen mit dem Regler (29) verbundenen Sensor (21, 23, 25, 27, 35, 37) zum Erfassen eines absoluten Wertes wenigstens eines Brennkammerparameters.

17. Regelvorrichtung nach einem der Ansprüche 13 bis 16, **dadurch gekennzeichnet, dass** als Stelleinrichtung wenigstens ein Brennstoffventil (31) zum Beeinflussen eines der Verbrennung in einer Brennkammer (12) zugeführten Brennstoffmassenstromes vorhanden ist.

18. Regelvorrichtung nach einem der Ansprüche 13 bis 17, **dadurch gekennzeichnet, dass** als Stelleinrichtung ein Verdichterleitschaufelkranz (32) vorhanden ist.

19. Regelvorrichtung nach einem der Ansprüche 13 bis 18, **dadurch gekennzeichnet, dass** der Regler (29) ein auf Fuzzy Logik basierendes Regelungskonzept beinhaltet.

20. Regelvorrichtung nach einem der Ansprüche 13 bis 18, **dadurch gekennzeichnet, dass** der Regler (29) ein auf einem neuronalen Netzwerk basierendes Regelungskonzept beinhaltet.

21. Regelvorrichtung nach einem der Ansprüche 13 bis 18, **dadurch gekennzeichnet, dass** der Regler (29) ein auf einem festen Regelgesetz basierendes Regelungskonzept beinhaltet.

22. Regelvorrichtung nach einem der Ansprüche 13 bis 21, **dadurch gekennzeichnet, dass** wenigstens ein Sensor (21, 23, 25) zum Erfassen einer oszillierende Messgrößen ausgebildet ist.

23. Regelvorrichtung nach Anspruch 22,
**dadurch gekennzeichnet, dass** eine Fouriertransformationseinheit (33) vorhanden ist, die zum Durchführen einer schnellen Fouriertransformation ausgebildet ist und/oder eine Recheneinheit für die Ermittlung der gemittelten Autokorrelationen.

## Claims

1. Regulating method for regulating the operating line of a gas turbine plant (1) with the following steps:
- capturing at least one controlled variable;
- comparing a captured controlled variable with a predetermined reference variable,
- determining at least one manipulated variable based on the comparison of the manipulated variable with the reference variable, and
- outputting the determined manipulated variable to at least one adjusting facility (31, 32) influencing the air supply and/or fuel supply to a combustion chamber (12) of the gas turbine plant (1), whereby a controlled variable which indicates the approach of the flame to a stability limit is used as the at least one controlled variable,
**characterised in that**
the change in at least one alternating pressure at a burner flange (13) over time and/or the change in an alternating pressure in the combustion chamber plenum (11) over time is captured as a controlled variable, wherein the alternating pressure in the combustion chamber plenum is captured by means of a sensor (21) arranged in the combustion chamber plenum.

2. Regulating method according to claim 1,
**characterised in that** the change in at least one combustion chamber acceleration over time is also captured as a controlled variable

3. Regulating method according to claim 1 or 2,
**characterised in that** in addition to the change in at least one alternating pressure over time and if necessary the change in at least one combustion chamber acceleration over time, at least one combustion parameter is captured as a controlled variable.

4. Regulating method according to claim 3,
**characterised in that** the NOₓ content of the combustion waste gas and/or the CO content of the combustion waste gas and/or the pressure drop across the combustion chamber serve(s) as a combustion parameter.

5. Regulating method according to one of claims 1 to 4,
**characterised in that** the absolute value of at least one burner parameter or combustion chamber parameter is captured as a further controlled variable.

6. Regulating method according to one of claims 1 to 5,
**characterised in that** at least one variable, which results in a change in gas turbine output, is output as a controlled variable, and/or a variable which results in a change in the corrected temperature of the combustion waste gases is output as a controlled variable, and/or a variable which results in a change in a pilot gas mass flow is output as a controlled variable.

7. Regulating method according to one of claims 1 to 6,
**characterised in that** the comparison of a captured controlled variable with a reference variable and/or the determination of the controlled variable based on the comparison is/are effected on the basis of a fuzzy logic.

8. Regulating method according to one of claims 1 to 6,
**characterised in that** the comparison of a captured controlled variable with a reference variable and/or the determination of the controlled variable based on the comparison is/are linked by means of a neural network.

9. Regulating method according to one of claims 1 to 6,
**characterised in that** the comparison of a captured controlled variable with a reference variable and/or the determination of the controlled variable based on the comparison is/are effected by means of a comparison using a fixed rule system.

10. Regulating method according to one of claims 1 to 9,
**characterised in that** oscillating variables are captured as controlled variables that can change over time.

11. Regulating method according to claim 10,
**characterised in that** an oscillating variable is subjected to a fast Fourier transformation and/or mean autocorrelation.

12. Regulating method according to claim 11,
**characterised in that** transients are formed.

13. Regulating device for regulating the operating line of a gas turbine plant (1) with
- at least one sensor (21, 23, 25, 27, 35, 37) for capturing a measurement variable and for outputting a measurement signal representing the measurement variable,
- at least one adjusting facility (31, 32) for influencing the air supply and/or fuel supply to a combustion chamber (12) of the gas turbine plant based on a manipulated variable, and
- a regulator (29) connected to the at least one sensor (21, 23, 25, 27, 35, 37) for receiving the measurement variable and the at least one adjusting facility (31, 32) for outputting the manipulated variable, said regulator (29) being configured to determine the manipulated variable based on the received measurement variable and its deviation from a reference variable,
**characterised in that**
a sensor (25) is present as a sensor (21, 23, 25, 27, 35, 37), which sensor (25) is configured to capture the change in at least one alternating pressure at a burner flange (13) over time and/or a sensor (21) is present as a sensor, which sensor (21) is configured to capture the change in an alternating pressure in a combustion chamber plenum (11) over time, wherein the sensor (21) capturing the change in the alternating pressure in the combustion chamber plenum (11) over time is arranged in the combustion chamber plenum.

14. Regulating device according to claim 13,
**characterised in that** a sensor (23) for capturing a combustion chamber acceleration is also present as the sensor.

15. Regulating device according to claim 13 or 14,
**characterised by** at least one emission measuring device (27) connected to the regulator (29).

16. Regulating device according to one of claims 13 to 15,
**characterised by** at least one sensor (21, 23, 25, 27, 35, 37) connected to the regulator (29) for capturing an absolute value of at least one combustion chamber parameter.

17. Regulating device according to one of claims 13 to 16,
**characterised in that** at least one fuel valve (31) for influencing a fuel mass flow supplied for combustion in a combustion chamber (12) is present as the adjusting facility

18. Regulating device according to one of claims 13 to 17,
**characterised in that** a compressor vane ring (32) is present as the adjusting facility.

19. Regulating device according to one of claims 13 to 18,
**characterised in that** the regulator (29) contains a regulating concept based on fuzzy logic.

20. Regulating device according to one of claims 13 to 18,
**characterised in that** the regulator (29) contains a regulating concept based on a neural network.

21. Regulating device according to one of claims 13 to 18,
**characterised in that** the regulator (29) contains a regulating concept based on a fixed rule system.

22. Regulating device according to one of claims 13 to 21,
**characterised in that** at least one sensor (21, 23, 25) is configured to capture an oscillating measurement variable.

23. Regulating device according to claim 22,
**characterised in that** a Fourier transformation unit (33) is present, which is configured to carry out a fast Fourier transformation and/or a computation unit for determining mean autocorrelations.

## Revendications

1. Procédé de régulation du fonctionnement d'une installation ( 1 ) à turbine à gaz comprenant les stade
- de relevé d'au moins une grandeur réglée,
- de comparaison d'une grandeur réglée relevée à une grandeur de référence donnée à l'avance,
- de détermination d'au moins une grandeur réglante, sur la base de la comparaison de la grandeur réglée à la grandeur de référence et
- d'émission de la grandeur réglante déterminée, sur au moins un dispositif ( 31, 32 ) de réglage, influençant l'apport d'air et/ou l'apport de combustible à une chambre de combustion ( 12 ) de l'installation ( 1 ) à turbine à gaz, dans lequel, trouve à s'utiliser comme la au moins une grandeur réglée, une grandeur réglée, qui indique que la flamme tend vers une limite de stabilité,
**caractérisé en ce que** l'on relève, comme grandeur réglée, la variation en fonction du temps, d'au moins une pression alternative, sur un flasque ( 13 ) du brûleur et/ou la variation en fonction du temps d'une pression alternative, dans la chambre ( 11 ) d'accumulation du brûleur, la pression alternative dans la chambre d'accumulation du brûleur étant relevée au moyen d'un capteur ( 21 ), disposé dans la chambre d'accumulation du brûleur.

2. Procédé de régulation suivant la revendication 1,
**caractérisé en ce que** l'on relève en outre, comme grandeur réglée, la variation en fonction du temps d'au moins une accélération de la chambre de combustion.

3. Procédé de régulation suivant la revendication 1 ou 2,
**caractérisé en ce qu'**outre la variation en fonction du temps d'au moins une pression alternative et, le cas échéant, de la variation en fonction du temps d'au moins une accélération de la chambre de combustion, on relève, comme grandeur réglée, au moins un paramètre de combustion.

4. Procédé de régulation suivant la revendication 3,
**caractérisé en ce que** l'on se sert, comme paramètres de combustion, de la teneur en NOx dans le gaz d'échappement de la combustion et/ou de la teneur en CO dans le gaz d'échappement de combustion et/ou de la perte de charge dans la chambre de combustion.

5. Procédé de régulation suivant l'une des revendications 1 à 4,
**caractérisé en ce que** l'on relève, comme autre grandeur réglée, la valeur absolue d'au moins un paramètre du brûleur ou d'un paramètre de la chambre de combustion.

6. Procédé de régulation suivant l'une des revendications 1 à 5,
**caractérisé en ce que** l'on émet, comme grandeur réglante, au moins une grandeur, qui entraîne une variation de la puissance de la turbine à gaz, et/ou on émet une grandeur, qui entraîne une variation de la température corrigée des gaz d'échappement de combustion, et/ou on émet une grandeur, qui entraîne une variation d'un courant massique de gaz pilote.

7. Procédé de régulation suivant l'une des revendications 1 à 6,
**caractérisé en ce que** l'on effectue la comparaison d'une grandeur réglée relevée à une grandeur de référence et/ou la détermination de la grandeur réglante au moyen de la comparaison, sur la base d'une logique floue.

8. Procédé de régulation suivant l'une des revendications 1 à 6,
**caractérisé en ce que** l'on effectue la comparaison d'une grandeur réglée relevée à une grandeur de référence et/ou la détermination de la grandeur réglante au moyen de la comparaison, à l'aide d'un réseau neuronal.

9. Procédé de régulation suivant l'une des revendications 1 à 6,
**caractérisé en ce que** l'on effectue la comparaison d'une grandeur réglée relevée à une grandeur de référence et/ou la détermination de la grandeur réglante au moyen de la comparaison, à l'aide d'une loi de réglage fixe.

10. Procédé de régulation suivant l'une des revendications 1 à 9,
**caractérisé en ce que** l'on relève des grandeurs oscillantes comme grandeurs réglées se modifiant en fonction du temps.

11. Procédé de régulation suivant la revendication 10,
**caractérisé en ce que** l'on soumet une grandeur oscillante à une transformation de Fourier rapide et/ou à une autocorrélation moyennée.

12. Procédé de régulation suivant la revendication 11,
**caractérisé en ce que** l'on forme des grandeurs transitoires.

13. Dispositif de régulation du fonctionnement d'une installation ( 1 ) à turbine à gaz comprenant
- au moins un capteur ( 21, 23, 25, 27, 35, 37 ), pour relever une grandeur de mesure et pour émettre un signal de mesure représentant la grandeur de mesure,
- au moins un dispositif ( 31, 32 ) de réglage pour influencer l'apport d'air et/ou du combustible à une chambre de combustion ( 12 ) de l'installation à turbine à gaz, sur la base d'une grandeur réglante et
- un régleur ( 29 ), qui est relié au au moins un capteur ( 21, 23, 25, 27, 35, 37 ) pour la réception de la grandeur de mesure, et au au moins un dispositif ( 31, 32 ) de réglage pour l'émission de la grandeur réglante, et qui est constitué, pour la détermination de la grandeur réglante, sur la base de la grandeur de mesure reçue et de son écart, à une grandeur de référence,
**caractérisé en ce que**
il y a, comme capteur ( 21, 23, 25, 27, 35, 37 ), un capteur ( 25 ), qui est conformé pour relever la variation en fonction du temps d'au moins une pression alternative sur un flasque ( 13 ) du brûleur et/ou il y a, comme capteur, un capteur ( 21 ), qui est conformé pour relever la variation en fonction du temps d'une pression alternative dans une chambre ( 11 ) d'accumulation du brûleur, le capteur ( 21 ) relevant la variation en fonction du temps de la pression alternative dans la chambre ( 11 ) d'accumulation du brûleur étant disposé dans la chambre d'accumulation du brûleur.

14. Dispositif de régulation suivant la revendication 13,
**caractérisé en ce qu'**il y a en outre comme capteur un capteur ( 23 ) pour relever une accélération de la chambre de combustion.

15. Dispositif de régulation suivant la revendication 13 ou 14, **caractérisé par** au moins un dispositif ( 27 ) de mesure d'émission relié au régleur ( 29 ).

16. Dispositif de régulation suivant l'une des revendications 13 à 15,
**caractérisé par** au moins un capteur ( 21, 23, 25, 27, 35, 37 ), qui est relié au régleur ( 29 ) et qui relève une valeur absolue d'au moins un paramètre de la chambre de combustion.

17. Dispositif de régulation suivant l'une des revendications 13 à 16,
**caractérisé en ce qu'**il y a, comme dispositif de réglage, au moins un robinet ( 31 ) à combustible, pour influencer un courant massique de combustible apporté à la combustion dans une chambre de combustion ( 12 ).

18. Dispositif de régulation suivant l'une des revendications 13 à 17,
**caractérisé en ce qu'**il y a, comme dispositif de réglage, une couronne ( 32 ) d'aube directrice de compresseur.

19. Dispositif de régulation suivant l'une des revendications 13 à 18,
**caractérisé en ce que** le régleur ( 29 ) incorpore un concept de régulation reposant sur une logique floue.

20. Dispositif de régulation suivant l'une des revendications 13 à 18,
**caractérisé en ce que** le régleur ( 29 ) incorpore un concept de régulation reposant sur un réseau neuronal.

21. Dispositif de régulation suivant l'une des revendications 13 à 18,
**caractérisé en ce que** le régleur ( 29 ) incorpore un concept de régulation reposant sur une loi de réglage fixe.

22. Dispositif de régulation suivant l'une des revendications 13 à 21,
**caractérisé en ce qu'**au moins un capteur ( 21, 23, 25 ) est constitué pour relever une grandeur de mesure oscillante.

23. Dispositif de régulation suivant la revendication 22,
**caractérisé en ce qu'**il y a une unité ( 33 ) de transformation de Fourier, qui est constituée pour effectuer une transformation de Fourier rapide et/ou une unité informatique pour la détermination des autocorrélations moyennées.
